Europäisches Patentamt

European Patent Office

Office européen des brevets

(11) Publication number : **0 507 564 A2**

# (12) EUROPEAN PATENT APPLICATION

(21) Application number : 92302860.9

(22) Date of filing : 01.04.92

(51) Int. Cl.⁵ : **C04B 35/52, C04B 35/80**

(30) Priority : **05.04.91 JP 73296/91**
**05.04.91 JP 73300/91**

(43) Date of publication of application :
**07.10.92 Bulletin 92/41**

(84) Designated Contracting States :
**DE FR GB**

(71) Applicant : **TOYOTA JIDOSHA KABUSHIKI**
**KAISHA**
**1, Toyota-cho Toyota-shi**
**Aichi-ken (JP)**

(71) Applicant : **OSAKA GAS COMPANY, LIMITED**
**1-2 Hiranomachi 4-chome Chuo-ku**
**Osaka-shi Osaka-fu (JP)**

(72) Inventor : **Miura, Hirohisa, Toyota Jidosha**
**Kabushiki Kaisha**
**1, Toyota-cho**
**Toyota-shi, Aichi-ken (JP)**
Inventor : **Imahashi, Kunihiko Toyota Jidosha**
**Kabushiki Kaisha**
**1, Toyota-cho**
**Toyota-shi, Aichi-ken (JP)**
Inventor : **Nakagawa, Yoshiteru, Toyota**
**Jidosha Kabushiki K.**
**1, Toyota-cho**
**Toyota-shi, Aichi-ken (JP)**
Inventor : **Azuma, Takayuki, Toyota Jidosha**
**Kabushiki Kaisha**
**1, Toyota-cho**
**Toyota-shi, Aichi-ken (JP)**

(74) Representative : **Ben-Nathan, Laurence Albert**
**Urquhart-Dykes & Lord 91 Wimpole Street**
**London W1M 8AH (GB)**

(54) Carbon composite material.

(57) A carbon composite material includes base including matrix carbon and ceramics buried in the base, and a difference between an average thermal expansion coefficient "$\alpha_1$" of the base in a range of 20 to 1000 °C and an average thermal expansion coefficient "$\alpha_2$" of the ceramics in a range of 20 to 1000 °C satisfies the following condition :
$$-2 \times 10^{-6}/°C \leqq ("\alpha_1" - "\alpha_2") \leqq 3.5 \times 10^{-6}/°C.$$
Therefore, the carbon composite material exhibits a high wear resistance. In addition, by varying the ceramics to be buried in the base, the carbon composite material can be made to exhibit desired friction coefficients at will while keeping the superb wear resistance

FIG. 5

DIFFERENCE BETWEEN THERMAL
EXPANSION COEFFICIENTS OF
BASE AND CERAMICS
$("\alpha_1" - "\alpha_2")(\times 10^{-6}/°C)$

## BACKGROUND OF THE INVENTION

### Field of the Invention

The present invention relates to a carbon composite material which is strong against wear, superior in a heat resistance as well as an oxidation resistance, and appropriate for applications to sliding members such as brake shoes, brake linings, brake pads, bushings, washers, rotors, sleeves, bearings or the like for air crafts, racing vehicles and so on, and carbon composite material which has a variable friction coefficient from low to high as well.

A carbon composite material according to the present invention is applicable to both of the following sliding members, i.e., brake materials or friction driving mechanical structural bodies and mechanical structural bodies used in a non-lubrication state. The brake materials or friction driving mechanical structural bodies are required to have an excellent wear resistance, a high friction coefficient and an excellent property in terms of a seizure resistance during sliding operation. The mechanical structural bodies used in a non-lubrication state are required to have an excellent wear resistance, a low friction coefficient and an excellent property in terms of a seizure resistance during dry sliding operation or high temperature sliding operation.

### Description of the Related Art

Carbon composite materials used in brake materials for air crafts, racing vehicles and so on are required to have a heat resistance and a wear resistance particularly. On the other hand, sliding portions of mechanical structural bodies are usually used under an oil lubrication condition because they have a low seizure resistance. As sliding members used under a dry condition, it has been known that there are oil impregnated sintered materials, sintered copper alloys and carbon materials. The carbon materials have been used in which carbon powder and pitch powder are burnt and solidified, or which are sintered at a high temperature so as to graphitize themselves.

As set forth in Japanese Unexamined Patent Publication No. 206,351/1988 (Kokai), there has been provided a carbon fiber reinforced carbon material recently which is a strength-enhanced version of the carbon materials used for the above-mentioned purposes. This carbon fiber reinforced carbon material is produced as follows. For instance, carbon fibers which work as reinforcement and have been subjected to surface treatments, such as carbonization or graphitization, oxidation or the like, are impregnated with a liquid carbonaceous material which works as binder, such as tar, pitch, thermosetting resin or the like. Then, they are burnt in an inert atmosphere, and graphitized, if necessary.

In addition, as set forth in Japanese Unexamined Patent Publication No. 13,926/1988 (Kokai) and Japanese Unexamined Patent Publication No. 60,173/1988 (Kokai), there have been reported carbon fiber reinforced carbon composite materials in which metal or carbide ceramics powder is mixed with carbon fiber reinforced materials.

Generally speaking, the conventional carbon fiber reinforced carbon materials and carbon composite materials have a low wear resistance. In particular, the composite materials in which ceramics is mixed are inferior in the wear resistance.

Moreover, the conventional carbon fiber reinforced carbon materials and carbon composite materials exhibit a low friction coefficient "$\mu$" under a relatively low temperature condition like room temperature or under a low load condition especially, but they exhibit a relatively high friction coefficient "$\mu$" under a high temperature condition or a high load. The carbon fiber reinforced carbon composite materials set forth in Japanese Unexamined Patent Publication No. 13,926/1988 (Kokai) and Japanese Unexamined Patent Publication No. 60,173/1988 (Kokai) include the metal and the carbide ceramics, and accordingly they have a higher friction coefficient than the carbon fiber reinforced carbon materials. However, a carbon fiber reinforced carbon composite material exhibiting a much higher friction coefficient has been longed for in certain applications. On the contrary, a carbon fiber reinforced carbon composite material exhibiting a low friction coefficient under a high temperature condition or a high load condition has been longed for as well.

## SUMMARY OF THE INVENTION

The present invention has been developed in view of the above-mentioned problems. It is a primary object of the present invention to provide an excellent carbon composite material in terms of a,wear resistance. It is a secondary object of the present invention to provide a superb carbon composite material which has an excellent wear resistance and which enables to select a predetermined friction coefficient in a wide range from a low friction coefficient to a high coefficient.

A carbon composite material according to the present invention is characterized in that it comprises base including matrix carbon and ceramics buried in the base, and in that a difference between an average thermal expansion coefficient "$\alpha_1$" of the base in a range of 20 to 1000 °C and an average thermal expansion coefficient "$\alpha_2$" of the ceramics in a range of 20 to 1000 °C satisfies the following condition:

$$-2 \times 10^{-6}/°C \leq (\text{"}\alpha_1\text{"} - \text{"}\alpha_2\text{"}) \leq 3.5 \times 10^{-6}/°C.$$

The inventors of the present invention have been preparing a variety of carbon fiber reinforced carbon composite materials by mixing a variety of ceramics with carbon fiber reinforced carbon materials, and they have been investigating the resulting composite materials on their densities, strengths, and friction coefficients and wear amounts under a dry condition as well as a wet condition in detail. For most cases, only very brittle composite materials have been obtained when the ceramics are used. However, the present inventors have found that carbon fiber reinforced carbon composite materials, which have a high wear resistance and the other excellent mechanical properties, can be obtained by specifying their bases.

Hence, the present inventors applied for patents on parts of the knowledge thus obtained under Japanese Patent Application No. 341,883/1989 and Japanese Patent Application No. 163,388/1990 in Japan. These inventions applied for patents are mainly characterized by base including carbon fiber reinforced carbon material. The base is a sintered body in which self-sintering carbon powder and preliminarily carbonized carbon fibers before being completely carbonized are sintered integrally, and it is superb in the wear resistance especially. Accordingly, the carbon fiber reinforced carbon composite materials in which this sintered body is adapted to be its base and a variety of ceramics are mixed therewith exhibit an excellent wear resistance, and it enables to give desired friction coefficients by selecting appropriate ceramics.

The present inventors have extensively continued the research and development, namely they have tried to widen the variety of the carbon fiber reinforced carbon materials applicable to the base, and they have combined the carbon fiber reinforced carbon materials in the widened variety with ceramics in a wider variety. As a result, the present inventors have discovered that the carbon composite materials exhibit a high wear resistance irrespective of the base materials when the thermal expansion coefficients of the base and the ceramics which constitute the carbon composite materials are in a predetermined relationship, to be concrete, when the thermal expansion coefficients of the both of them are similar to each other. In particular, when the present inventors have combined the carbon fiber reinforced carbon materials in the widened variety with oxide ceramics in the widened variety, they have discovered a novel carbon composite material which has a high friction coefficient as well as a high mechanical strength applicable to the mechanical structural bodies. The present inventors have thus completed the present invention.

Specifically speaking, in the carbon composite material according to the present invention, a difference between an average thermal expansion coefficient "$\alpha_1$" of the base in a range of 20 to 1000 °C and an average thermal expansion coefficient "$\alpha_2$" of the ceramics in a range of 20 to 1000 °C satisfies the following condition:

$$-2 \times 10^{-6}/°C \leq (\text{"}\alpha_1\text{"} - \text{"}\alpha_2\text{"}) \leq 3.5 \times 10^{-6}/°C.$$

Carbon composite materials differ from metallic materials in that the carbon of the base and the ceramics buried in the base are hardly bound each other by wettability or the like. Since the carbon composite materials are sintered at a high temperature, usually at 1500 to 3000 °C, gaps are likely to occur at boundaries between the base and the ceramics during the sintering. Accordingly, the ceramics are likely to come off from the bases. In particular, when shear such as sliding or the like acts on the carbon composite materials, the ceramics come off from the sliding surfaces of the carbon composite materials, and the come-off ceramics wear the carbon composite materials themselves. Consequently, the carbon composite materials further deteriorate in terms of the wear resistance.

The difference between thermal expansion coefficients of base and ceramics constituting a carbon composite material results in the gaps which occur at the boundaries between the base and the ceramics. In the carbon composite material according to the present invention, the difference between the thermal expansion coefficients of its base and ceramics are so small that there occur small gaps at the boundaries between the base and the ceramics through thermal expansion. In addition, there occur small strains resulting from the thermal expansion difference. Therefore, in the carbon composite material according to the present invention, the ceramics is less likely to come off from the base, and accordingly the present carbon composite material wears less.

Moreover, when the carbon composite material according to the present invention comprises base including carbon fiber reinforced carbon, and oxide ceramics having a melting point of 1600 °C or more, being less likely to react with carbon of the base and buried in the base in an amount of 3 to 20% by weight or more, the carbon composite material comes to have a high friction coefficient as well as a high mechanical strength applicable to the mechanical structural bodies.

The base constituting the carbon composite material according to the present can include matrix carbon only. However, it includes not only matrix carbon but also carbon fiber preferably. When the carbon composite material is expected to have a high friction coefficient as well as a high mechanical strength, the base is constituted with carbon fiber reinforced carbon which includes carbon fiber and matrix carbon.

As the carbon fiber, it is possible to use carbon fiber which is made from polyacrylonitrile (hereinafter abbreviated to PAN), coal pitch, petroleum pitch or the like as a raw material. The carbon fiber is made by spinning and carbonizing the raw material. As preferable carbon fiber, there is optically isotropic pitch carbon fiber. This optically isotropic pitch carbon fiber hardly exhibits the thermal expansion coefficient anisotropy which results from a fiber orientation direction, and it has an average thermal expansion coefficient of 2 to 4 x $10^{-6}$/°C in a range of 20 to 1000 °C. Further, there has been known PAN or pitch fiber which has a high strength, a high rigidity and an optical anisotropy. This carbon fiber has negative thermal expansion coefficients in a fiber orientation direction in a range of room temperature to 400 °C approximately, it has an average thermal expansion coefficient of 0 to 2 x $10^{-6}$/°C in a fiber orientation direction in a range of 400 to 1000 °C, and it exhibits different thermal expansion coefficients in a longitudinal direction and in a direction perpendicular to the longitudinal direction, respectively. This carbon fiber can be used satisfactorily depending on applications.

As the carbon fiber, it is possible to use preliminarily carbonized carbon fiber which is before the complete carbonization. Here, the preliminarily carbonized carbon fiber means carbon fiber which has not been subjected to an ordinary complete carbonization treatment. In other words, it means carbon fiber which can accept further carbonization. Specifically speaking, when pitch is used as a raw material, the preliminarily carbonized carbon fiber means spun pitch fiber which is as spun,"or infusible fiber which is spun and made infusible at a temperature of not more than 500 °C. When polymer fiber is used as a raw material, the preliminarily carbonized carbon fiber means fiber like PAN carbon fiber which has been got through a decomposition process and which is prior to a graphitizing treatment.

As for a fiber length of these carbon fibers, they can be either short (i.e., discontinuous) fiber or long (i.e., continuous) fiber. When using short fiber, its fiber length can be 0.01 to 50 mm. It is especially preferable to use short fiber having a fiber length of 0.03 to 10 mm in view of the easy mixing and the aspect ratio. When the fiber length is too long, the fibers are entangled to deteriorate the dispersibility and finally the uniformity of the final product property. When the fiber length is less than 0.01 mm, the strength of the final product decreases sharply. Hence, such a fiber length is not preferable. As for a fiber diameter of these carbon fibers, it is preferable to use the carbon fibers having a diameter of 5 to 25 micrometers. Further, these carbon fibers can be used in a form of a non-woven fabric or a coating fabric.

Moreover, it is preferable to subject the carbon fibers further to a surface treatment with a material which includes a viscous component such as tar, pitch, organic polymer or the like in order to improve the affinity for binder. This surface treatment can be carried out as follows. The material including the viscous component is added to 100 parts by weight of the carbon fibers in an amount of about 100 to 1000 parts by weight. The mixture is then stirred, washed with an organic solvent and dried.

In addition, since the dried fibers may sometimes come together in a mass or aggregate, the thus surface-treated carbon fibers are dispersed, if required. If such is the case the dispersion can be carried out by any means like an ordinary powder mill, atomizer, pulverizer and so on.

As the matrix carbon, it is possible to utilize the following: one obtained by carbonizing resin such as phenol resin or the like, one obtained by heating and further carbonizing coal pitch or petroleum pitch, pulverized coke, powder having a self-sintering property such as mesocarbon micro-beads, carbon obtained by a vapor phase process through CVD (chemical vapor deposition) or the like. Generally speaking, in these matrix carbons, the mesocarbon micro-beads, the carbon obtained by a vapor phase process through CVD and mesophase pitch have a relatively high thermal expansion coefficient.

The base includes the above-mentioned carbon fiber and matrix carbon, and accordingly the thermal expansion coefficient "$\alpha_1$" of the base depends on the carbon fiber and matrix carbon which are used. Further, the thermal expansion coefficient "$\alpha_1$" of the base also depends on a carbon fiber orientation direction. Although the average thermal expansion coefficient of the base in a range of 20 to 1000 °C depends on how the carbon fibers are oriented, it is 0.3 to 3 x $10^{-6}$/°C in the carbon fiber orientation direction in general, and it is 2.0 to 8.0 x $10^{-6}$/°C in a direction perpendicular to the longitudinal direction of the carbon fiber in general.

Further, the thermal expansion coefficient "$\alpha_1$" of the base depends on a mixing ratio of the carbon fiber. Generally speaking, the carbon fiber exhibits a smaller thermal expansion coefficient than the matrix carbon does. Therefore, the base in which the carbon fiber is mixed in a lower mixing ratio exhibits a greater thermal expansion coefficient than the base in which the carbon fiber is mixed in a higher ratio does.

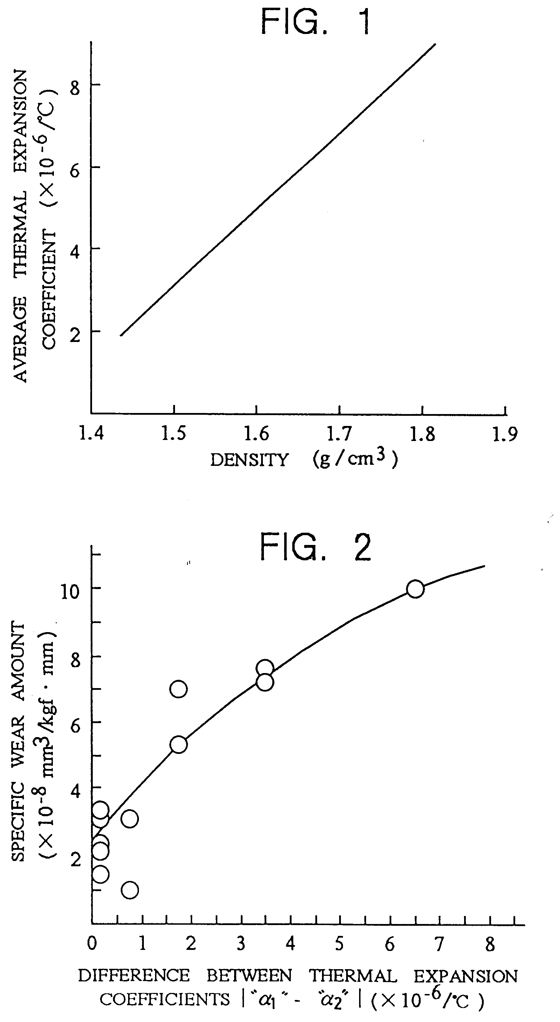

Furthermore, the thermal expansion coefficient "$\alpha_1$" of the base depends on a density of the base. The larger the density becomes, the greater the thermal expansion coefficient "$\alpha_1$" becomes. For example, Figure 1 illustrates a relationship between an average thermal expansion coefficient "$\alpha$" of a carbon fiber reinforced carbon composite material in a range of 20 to 1000 °C and a density thereof. The data of Figure 1 was obtained as follows. An initial carbon fiber reinforced carbon composite material was used to prepare test specimens,

4

and it was densified while varying the densification condition, thereby preparing a few kinds of carbon fiber reinforced carbon composite material test specimens which have different densities. These test specimens are measured for their average thermal expansion coefficients "$\alpha$" in a range of 20 to 1000 °C and their densities. The initial carbon fiber reinforced carbon composite material means a prepreg which has got through carbonization and sintering only. Although the results illustrated in Figure 1 are not obtained by measuring the thermal expansion coefficient "$\alpha_1$" of the base directly, it is possible to suppose that the same phenomena would occur in the base.

Moreover, the thermal expansion coefficient "$\alpha_1$" of the base depends on a degree of graphitization, a ratio of amorphous carbon or the like. Hence, it is possible to obtain base which has the aiming thermal expansion coefficient or base which has a thermal expansion coefficient similar to the aiming one by appropriately selecting the carbon fiber types, the mixing ratio, the degree of graphitization or the like.

When the above-mentioned isotropic carbon fiber free from the anisotropy in the fiber orientation direction is used and when carbon having a relatively large thermal expansion coefficient is used as the matrix carbon, a base is obtained whose thermal expansion coefficient is free from the anisotropy resulting from the fiber orientation. The thermal expansion coefficient "$\alpha_1$" of the base is 3 to $9.0 \times 10^{-6}$/°C.

It is preferable that the ceramics has a high melting point of 1600 °C or more, and that it is less likely to react with carbon during the production of the carbon composite material. Since the thermal expansion coefficient "$\alpha_1$" of the base is a relatively small value of about 3 to $9.0 \times 10^{-6}$/°C, it is preferable that the ceramics has a relatively small thermal expansion coefficient "$\alpha_2$."

As the ceramics having such a high melting point, being less likely to react with carbon, exhibiting a relatively small thermal expansion coefficient "$\alpha_2$" and including inorganic oxide, the following are recommended: mullite ($3Al_2O_3 \cdot 2SiO_2$, "$\alpha_2$": 4.5 to $5.7 \times 10^{-6}$/°C), alumina ($Al_2O_3$, "$\alpha_2$": 7.2 to $9.0 \times 10^{-6}$/°C), rutile ($TiO_2$, "$\alpha_2$": 6.8 to $8.3 \times 10^{-6}$/°C), zirconia ($ZrO_2$, "$\alpha_2$": $10.4 \times 10^{-6}$/°C), and beryllia (BeO, "$\alpha_2$":7.5 to $9.0 \times 10^{-6}$/°C).

Thus, the carbon composite material whose friction coefficient falls in a range of 0.28 to 0.45 under a dry condition is obtained by mixing the oxide ceramics.

Further, as preferable boride ceramics, the following are recommended: titanium boride ($TiB_2$, "$\alpha_2$": 7.6 to $8.3 \times 10^{-6}$/°C), and zirconium boride ($ZrB_2$, "$\alpha_2$": 5.3 to $6.2 \times 10^{-6}$/°C).

Other than these borides, $B_4C$, NiB, CoB, BN, $TaB_2$ or the like can be used depending on applications. Thus, the carbon composite material whose friction coefficient falls in a range of 0.05 to 0.13 under a dry condition is obtained by mixing the boride ceramics.

Furthermore, as preferable nitride ceramics, the following are recommended: aluminum nitride (AlN, "$\alpha_2$": 4.4 to $5.0 \times 10^{-6}$/°C), zirconium nitride (ZrN, "$\alpha_2$": 6.5 to $7.5 \times 10^{-6}$/°C), titanium nitride (TiN, "$\alpha_2$": 8.5 to $9.5 \times 10^{-6}$/°C), and tantalum nitride (TaN, "$\alpha_2$": $3.8 \times 10^{-6}$/°C).

Other than these nitrides, $Cr_2N$, BN or the like can be used depending on applications. Thus, the carbon composite material whose friction coefficient falls in a range of 0. 19 to 0. 34 under a dry condition is obtained by mixing the nitride ceramics.

Moreover, carbide such as $B_4C$, TiC, TaC, ZrC or the like can be used as the other ceramics. It is possible to mix and use one or more of the above-mentioned ceramics.

In addition, when the ceramics are used in a form of powder, it is preferable that its average particle diameter falls in a range of 0.1 to 10 micrometers in view of the affinity for the base, the dispersibility, and the strength and wear resistance of the completed carbon composite material. It is further preferable that the average particle diameter falls in a range of 0.3 to 5 micrometers. When the average particle diameter is less than 0.1 micrometer, it is hard to carry out mixing uniformly. When the average particle diameter is more than 10 micrometers, there arises a possibility of causing abnormal wear.

When the ceramics are used in a form of fiber, it is preferable that its diameter and length fall in a range of 0.7 to 40 micrometers and in a range of 0.01 to 8 mm, respectively in view of the affinity'for the base, the dispersibility, and the strength and wear resistance of the completed carbon composite material. It is further preferable that the diameter and length fall in a range of 1 to 15 micrometers and in a range of 0. 05 to 3 mm, respectively. When the fiber is used in a form of cloth, long fiber like filament can be used. The fiber herein means to include whisker, ceramics fiber or the like.

As described earlier, in the carbon composite material according to the present invention, a difference between an average thermal expansion coefficient "$\alpha_1$" of the base in a range of 20 to 1000 °C and an average thermal expansion coefficient "$\alpha_2$" of the ceramics in a range of 20 to 1000 °C satisfies the following condition:
$$-2 \times 10^{-6}/°C \leqq ("\alpha_1" - "\alpha_2") \leqq 3.5 \times 10^{-6}/°C.$$

When ("$\alpha_1$" - "$\alpha_2$") is less than $-2 \times 10^{-6}$/°C, namely when the average thermal expansion coefficient "$\alpha_1$" of the base is smaller than the average thermal expansion coefficient "$\alpha_2$" of the ceramics by $2 \times 10^{-6}$/°C, there arise non-negligible gaps at the boundaries between the base and the ceramics so that the wear resistance lowers.

The same thing can be said when the ("$\alpha_1$" - "$\alpha_2$") is greater than 3.5 x 10$^{-6}$/°C. Namely, when the average thermal expansion coefficient "$\alpha_1$" of the base is larger than the average thermal expansion coefficient "$\alpha_2$" of the ceramics by 3.5 x 10$^{-6}$/°C, there arise non-negligible strains at the boundaries between the base and the ceramics so that the wear resistance lowers.

The ("$\alpha_1$" - "$\alpha_2$") values differ on the positive side and the negative side. This is believed as follows. The boundary relationship between the base and the ceramics of the carbon composite material is determined by the sintering temperature. When a temperature decreases from the sintering temperature to room temperature, the boundary relationship between the base and the ceramics is varied by thermal shrinkage resulting from the temperature variation. In the case that ("$\alpha_1$" - "$\alpha_2$") is negative, namely the thermal expansion coefficient of the ceramics is greater, the ceramics is shrunk greatly when the temperature decreases to room temperature, and accordingly there arise gaps at the boundaries between the base and ceramics. On the contrary, in the case that ("$\alpha_1$" - "$\alpha_2$") is positive, namely the thermal expansion coefficient of the ceramic is smaller, the base is shrunk greatly when the temperature decreases to room temperature, and accordingly the base closely encloses the ceramics in the same principle as the shrink fit. As a result, there occur no gaps. When ("$\alpha_1$" - "$\alpha_2$") is too large, the base comes not to absorb the strains resulting from the thermal expansion difference, and accordingly the base is fractured. As a result, the wear resistance of the carbon composite material degrades sharply.

For reference, carbon composite materials having a variety of thermal expansion coefficient differences ("$\alpha_1$" - "$\alpha_2$") were prepared by using a predetermined base and by varying ceramics to be mixed therewith, and they were evaluated for a relationship between their thermal expansion coefficient differences ("$\alpha_1$" - "$\alpha_2$") and their specific wear amounts. The resulting graph is shown in Figure 2. In Figure 2, the thermal expansion coefficient differences ("$\alpha_1$" - "$\alpha_2$") are expressed in the absolute values. It is apparent from Figure 2 that the specific wear amount decreases as the absolute value of the difference, $\mid$"$\alpha_1$" - "$\alpha_2$"$\mid$, approaches zero (0).

Particularly, when one desires the carbon composite material which has a high friction coefficient and a high mechanical as well, the 'oxide ceramics having a melting point of 1600 °C or more and being less likely to react with carbon of the base is buried in the base. The oxide ceramics can be magnesia (MgO), calcium oxide (CaO) and silicon dioxide (SiO$_2$) in addition to the above-mentioned oxide ceramics, e.g., mullite, alumina, rutile, zirconia and beryllia. Among these oxide ceramics, magnesia (MgO, "$\alpha_2$": 13.0 to 13.5 x 10$^{-6}$/°C) especially effects to raise the friction coefficient. However, since magnesia has such a high thermal expansion coefficient, it lowers the material strength, the wear resistance or the like when it is included in the carbon composite material. Accordingly, it is not preferable that magnesia is included in a large amount.

As described above, the present inventors have acknowledged the following. Namely, the more similar the thermal expansion coefficient of the base constituting the base of the present carbon composite material and the thermal expansion coefficient of the oxide ceramics become, the further the mechanical property such as the material strength or the like of the carbon composite material is improved. In a temperature range of 20 to 1000 °C, where the carbon composite material according to the present invention is expected to be in service, the average thermal expansion coefficient of the carbon fiber reinforced carbon constituting the base is relatively low. On the contrary, the average thermal expansion coefficient of the oxide ceramics is high in the temperature range.

Therefore, it is preferable to use base which exhibits a thermal expansion coefficient as high as possible in a range where its strength degradation is permissible. The thermal expansion coefficient of the carbon fiber reinforced carbon constituting the base can be adjusted at will to some extent by selecting the matrix carbon raw material to be used or the kind of the carbon fiber to be used, or by changing the production process.

As the oxide ceramics, it is preferable to select and use oxide ceramics which exhibits a low thermal expansion coefficient. When oxide ceramics exhibiting a high thermal expansion coefficient should be selected depending applications, the following methods can be employed, for instance, decreasing its mixing amount, or mixing it with the other ceramics exhibiting a low thermal expansion coefficient.

When a whole of the carbon composite material according to the present invention is taken as 100% by weight (unless otherwise specified, percentages hereinafter mean percentages by weight), it is preferable to include the ceramics in an amount of 3 to 20% in the carbon composite material. When the ceramics is included in an amount of less than 3%, the friction coefficient is not improved or lowered sufficiently. On the contrary, when the ceramics is included in an amount of more than 20%, the material strength is decreased sharply. It is preferable to include the carbon fiber in an amount of 0 to 40% in the carbon composite material. When the carbon fiber is included in an amount of more than 40%, the material strength is decreased sharply.

Moreover, an apparent density of the carbon composite material according to the present invention is preferred to be 1.65 g/cm$^3$ or more. Namely, the higher the apparent density becomes, the more the carbon composite material improves in terms of the mechanical property such as the material strength, the wear resistance or the like.

6

A shape of the carbon composite material according to the present invention is not restricted particularly. For example, the carbon composite material can be made into a predetermined shape of a brake shoe, a brake lining, a brake pad, a busing, a washer, a rotor, a sleeve or the like.

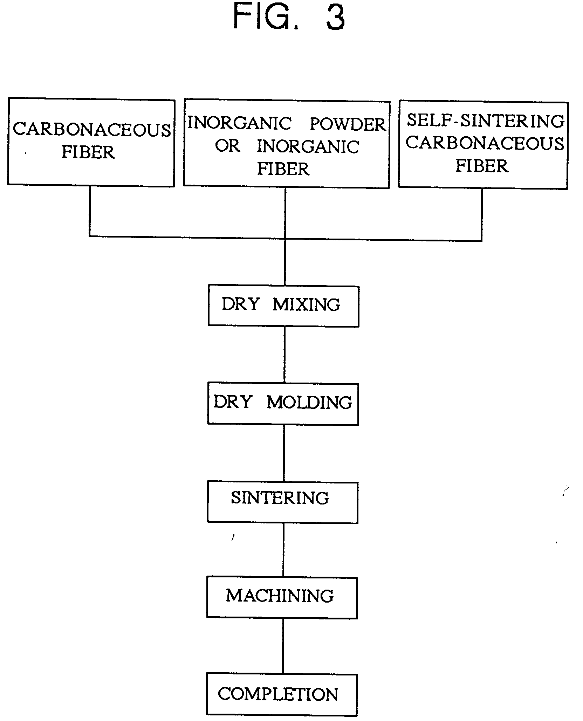

The carbon composite material can be produced by known processes. When using self-sintering carbon powder as the matrix carbon, the carbon composite material can be produced, for instance, by a simple process illustrated in Figure 3 and including dry mixing, dry molding and sintering. In view of making the strength and the wear resistance isotropic, it is preferable to uniformly mix the above-described raw materials.

The molding operation of the carbon composite material according to the present invention can be carried out by ordinary processes. The carbon composite material can be usually molded into the predetermined shapes under a pressure application of 1 to 10 ton/cm$^2$, or it can be molded by CIP (cold isostatic pressing) process, HIP (hot isostatic pressing) process, hot pressing process or the like. The molding operation is carried out at an ordinary temperature, or it is carried out by heating the raw materials to 500 °C approximately in an inert atmosphere. The sintering operation is carried out by heating the molded body to 700 to 1500 °C approximately so as to carbonize and solidify the carbon fiber and the self-sintering carbon powder. The thus carbonized composite body can be heated to the sintering temperature or more in a graphitizing furnace so as to graphitize itself, if necessary.

When using a liquid raw material or a raw material to be liquefied by heating as the matrix carbon, it is preferable to mix the ceramics into the matrix carbon raw material. The carbon fiber can be mixed into the matrix carbon raw material in a manner similar to the conventional processes, or it can be made into a preliminarily molded body and the matrix carbon raw material can be adhered thereto. In order to obtain a composite body, the resulting molded body is heated so as to develop the carbonization of the matrix carbon raw material and integrate the whole. The conditions of the carbonization-are not restricted particularly. The carbonization can be usually carried out by raising a temperature from an ordinary temperature to 1500 °C approximately at a rate of about 0.1 to 300 °C/hour and by keeping the thus raised temperature for 0.5 to 10 hours approximately. Moreover, during the sintering, part of the composite body is carbonized and thereafter graphitized by sintering at a higher temperature.

Likewise, the conditions of the graphitization are not restricted particularly. The graphitization can be usually carried out in a non-oxidizing atmosphere by raising a temperature from the sintering temperature to 1500 to 3000 °C approximately at a rate of about 0.1 to 500 °C/hour and by keeping the thus raised temperature for 0.5 to 10 hours approximately. When the graphitization is carried out, the graphite crystals have grown fully and oriented orderly, and thereby a final product improves further in terms of the density, the strength, the wear resistance or the like.

The carbon composite material according to the present invention in which the ceramics is mixed is produced so that the difference between the thermal expansion coefficient "$\alpha_1$" of the base and the thermal expansion coefficient "$\alpha_2$" of the ceramics satisfies the following condition:
$$-2 \times 10^{-6}/°C \leq ("\alpha_1" - "\alpha_2") \leq 3.5 \times 10^{-6}/°C.$$
As a result, he present carbon composite material exhibits a high wear resistance. Namely, and it has a wear resistance superior to that of the carbon fiber reinforced carbon material in which no ceramics is mixed.

Moreover, the ceramics can be selected so as to keep the difference between the thermal expansion coefficient of the base and the thermal expansion coefficient of the ceramics in the above-described range, and consequently the carbon composite material according to the present invention can be made to exhibit desired friction coefficients at will while keeping its superb wear resistance. Hence, the present carbon composite material can be applied to brake shoes, brake linings, brake pads, bushings, washers, rotors, sleeves, bearings or the like, which are required to have superior durabilities as well as predetermined friction properties, for air crafts, racing vehicles and so on.

Moreover, the carbon composite material according to the present invention in which the oxide ceramics is included comes to have a higher friction coefficient than those of the carbon fiber reinforced carbon in which no ceramics is included and the carbon composite material in which silicon carbide or the like is included. Especially, the present carbon composite material, in which the difference between the thermal expansion coefficient of the base adapted to be the matrix and,the thermal expansion coefficient of the oxide ceramics is small, comes to wear less. Hence, the present carbon composite material can be applied not only to the above-mentioned component parts of the air crafts, racing vehicles and so on but also the brake materials or the friction driving mechanical structural bodies, e.g., friction driving rotors or the like, which are required to have a high friction coefficient and an excellent seizure resistance during sliding operation.

BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:

Figure 1 is a graph illustrating a relationship between densities of carbon composite materials and average thermal expansion coefficients thereof;

Figure 2 is a graph illustrating a relationship between average thermal expansion coefficient differences, between bases and ceramics constituting carbon composite materials, and specific wear amounts thereof;

Figure 3 is a block diagram illustrating a production process of a carbon composite material;

Figure 4 is a diagram illustrating relationships between friction coefficients of carbon composite materials of Example Nos. 1-1 through 4-2 as well as Comparative Example Nos. 1 through 4 under a dry friction and wear condition and ceramics powders used therein;

Figure 5 is a graphic representation of relationships between average thermal expansion coefficient differences, between the bases and the ceramics powders used in the carbon composite materials of in Example Nos. 1-1 through 4-2 as well as Comparative Example Nos. 2 through 4, and wear amounts thereof;

Figure 6 is a diagram illustrating relationships between friction coefficients of carbon composite materials of Example Nos. 5 through 8 as well as Comparative Example Nos. 5 through 8 under a dry friction and wear condition and ceramics powders used therein; and

Figure 7 is a diagram illustrating relationships between friction coefficients of the carbon composite materials of Example Nos. 5 through 8 as well as Comparative Example Nos. 5 through 8 under a wet friction and wear condition and the ceramics powders used therein.

DETAILED DESCRIPTION OF THE PREFERRED EMBODIMENTS

Having generally described the present invention, a further understanding can be obtained by reference to the specific preferred embodiments which are provided herein for purposes of illustration only and are not intended to limit the scope of the appended claims.

Example No. 1-1

As the carbon fiber, PAN isotropic carbon fiber including 6000 filaments was used. As the matrix carbon raw material, phenol resin powder was used. As the ceramics, alumina powder ("$\alpha_2$": 7.2 x $10^{-6}$/°C) having an average particle diameter of 1.0 micrometer was used.

First of all, the raw materials were mixed in a mixing ratio of the phenol resin powder : water : the alumina powder = 50 : 40 : 10 by weight, thereby preparing a uniform slurry. The carbon fiber bundle was immersed into the slurry, thereby adhering the slurry on the surfaces of the filaments. The carbon fiber bundle with the slurry adhered was dried at 120 °C, and thereafter it was cut to a length of 30 mm. The thus obtained prepreg was placed in a mold having a diameter of 100 mm, and it was compression-molded at 160 °C under a pressure of 120 kgf/cm². Thereafter, the thus molded body was heated gradually to 1000 °C in a nitrogen gas atmosphere, and it was carbonized and sintered. An initial carbon composite material was thus obtained.

Then, the same alumina powder and coal pitch having a softening point of 80 °C were mixed in a mixing ratio of 20 : 80 by weight, and the mixture was melted at 120 °C. The initial carbon composite material was immersed into the resulting mixed molten solution. Accordingly, the mixed molten solution was impregnated into the pores of the initial carbon composite material. The thus obtained impregnated material were again heated gradually to 1000 °C. This impregnation and heating operation was carried out repeatedly three times. An intermediate carbon composite material having an apparent density of 1.56 g/cm³ was thus obtained.

The intermediate carbon composite material was further sintered at 1700 °C for 30 minutes. Finally, a carbon composite material of Example No. 1-1 having an apparent density of 1.70 g/cm³ was thus obtained. This carbon composite material included alumina in an amount of 5.6%, and its average thermal expansion coefficient "$\alpha$" was 7.0 x $10^{-6}$/°C in a range of 20 to 1000 °C. As can be seen from an average thermal expansion coefficient "$\alpha_1$" of Comparative Example No. 1 described below, in the carbon composite material of this example, the difference between the thermal expansion coefficients of the base and the ceramics was -0.7 x $10^{-6}$/°C.

Comparative Example No. 1

Carbon fiber reinforced carbon material which included the carbon fiber and the phenol resin carbide of Example No. 1-1 and which was free from the alumina thereof was made and taken as the base of Example Nos. 1-1, 1-2 and 1-3. Comparative Example No. 1 exhibited an average thermal expansion coefficient "$\alpha_1$" of

$6.5 \times 10^{-6}/°C$ in a range of 20 to 1000 °C.

Example No. 1-2

A carbon composite material of Example No. 1-2 including titanium boride was obtained in the same manner as that of Example No. 1-1 other than that titanium boride powder ($"\alpha_2"$: $8.2 \times 10^{-6}/°C$) having an average particle diameter of 1.4 micrometers was used instead of the alumina powder used in Example No. 1-1.

This carbon composite material had an apparent density of 1.72 g/cm$^3$, it included titanium boride in an amount of 5.8%, and it exhibited an average thermal expansion coefficient "$\alpha$" of $6.8 \times 10^{-6}/°C$ in a range of 20 to 1000 °C. Further, in the carbon composite material of this example, the difference between the thermal expansion coefficients of the base and the ceramics was $-1.7 \times 10^{-6}/°C$.

Example No. 1-3

A carbon composite material of Example No. 1-3 including aluminum nitride was obtained in the same manner as that of Example No. 1-1 other than that aluminum nitride powder ($"\alpha_2"$: $4.5 \times 10^{-6}/°C$) having an average particle diameter of 1.4 micrometers was used instead of the alumina powder used in Example No. 1-1.

This carbon composite material had an apparent density of 1.75 g/cm$^3$, it included aluminum nitride in an amount of 5.7%, and it exhibited an average thermal expansion coefficient "$\alpha$" of $6.7 \times 10^{-6}/°C$ in a range of 20 to 1000 °C. Further, in the carbon composite material of this example, the difference between the thermal expansion coefficients of the base and the ceramics was $+2.0 \times 10^{-6}/°C$.

Example No. 2-1

As the carbon fiber; pitch carbon fiber (optically isotropic fiber, Donacarbo "S210" made by Donac Co., Ltd.) having a length of 20 mm was used. This pitch carbon fiber was pulverized to and used as milled powder having a fiber length of 0.5 mm. As the matrix carbon raw material, coal tar mesocarbon micro-beads (made by Osaka Gas Co., Ltd.) having an average particle diameter of 7 micrometers was used. As the ceramics, titanium boride (TiB$_2$) powder ($"\alpha_2"$: $8.2 \times 10^{-6}/°C$) having an average particle diameter of 1.4 micrometer was used. The raw materials were mixed in a mixing ratio of the carbon fiber : the mesocarbon micro-beads : the titanium boride powder = 25 : 75 : 5 by weight. The resulting mixture was blended with a grinding mixer, and further it is molded with a universal press at room temperature under a molding pressure of 1 ton/cm$^2$. Thereafter, the thus molded body was heated to 1000 °C at a heating speed of 150 °C/hour under an ordinary pressure in a non-oxidizing atmosphere, it was held at the temperature for 1 hour, and then it was further heated to 1900 °C at a heating speed of 500 °C/hour to sinter. A carbon composite material of Example No. 2-1 was thus obtained.

This carbon composite material had an apparent density of 1.87 g/cm$^3$, it included titanium boride in an amount of 5.8%, and its average thermal expansion coefficient "$\alpha$" was $7.5 \times 10^{-6}/°C$ in a range of 20 to 1000 °C.

The base of this example which included the carbon fiber and the mesocarbon micro-beads and which was free from the titanium boride exhibited an average thermal expansion coefficient "$\alpha_1$" of $7.3 \times 10^{-6}/°C$ in a range of 20 to 1000 °C. Accordingly, in the carbon composite material of this example, the difference between the thermal expansion coefficients of the base and the ceramics was $-0.9 \times 10^{-6}/°C$.

Example No. 2-2

A carbon composite material of Example No. 2-2 including tantalum nitride was obtained in the same manner as that of Example No. 2-1 other than that tantalum nitride (TaN) powder ($"\alpha_2"$: $3.8 \times 10^{-6}/°C$) having an average particle diameter of 3.1 micrometers was used instead of the titanium boride powder used in Example No. 2-1.

A tantalum nitride content and an apparent density of the thus obtained carbon composite material were 5.7% and 1.90 g/cm$^3$, respectively. An average thermal expansion coefficient "$\alpha$" of this carbon composite material was $7.2 \times 10^{-6}/°C$ in a range of 20 to 1000 °C. Further, in the carbon composite material of this example, the difference between the thermal expansion coefficients of the base and the ceramics was $3.5 \times 10^{-6}/°C$.

Comparative Example No. 2

A carbon composite material of Comparative Example No. 2 including zirconia was obtained in the same manner as that of Example No. 2-1 other than that zirconia (ZrO$_2$) powder ($"\alpha_2"$: $10.4 \times 10^{-6}/°C$) having an aver-

age particle diameter of 1.0 micrometer was used instead of the titanium boride powder used in Example No. 2-1.

An apparent density of this carbon composite material was 1.83 g/cm$^3$, and its zirconia content was 6.2%. An average thermal expansion coefficient "$\alpha$" of this carbon composite material was 7.6 x 10$^{-6}$/°C in a range of 20 to 1000 °C. Further, in the carbon composite material of this comparative example, the difference between the thermal expansion coefficients of the base and the ceramics was -3.1 x 10$^{-6}$/°C.

Example No. 3-1

As the carbon fiber, pitch carbon fiber including 3000 filaments was used. As the matrix carbon raw material, a mixture was used in which pulverized pitch having a softening point of 280 °C and pulverized coke were mixed in equal volumes. As the ceramics power, zirconium boride powder ("$\alpha_2$": 8.3 x 10$^{-6}$/°C) having an average particle diameter of 2.0 micrometer was used.

First of all, the raw materials were mixed in a mixing ratio of the pulverized pitch : the pulverized coke : the zirconium powder = 1 : 1 : 0.5 by weight, and they were fully blended to prepare mixed powder. Then, this mixed powder was adhered to the surfaces of the carbon fiber filaments with a particle adhering apparatus. The surfaces of the carbon fiber with the mixed powder adhered were covered with polyethylene in a film thickness of 10 micrometers, and the carbon fiber was wound around a bobbin, thereby preparing an intermediate body. This intermediate body was placed in a mold so as to orient in a predetermined direction, thereby making a plate-shaped assembly body. This assembly body was hot-pressed at 600 °C under a molding pressure of 500 kgf/cm$^2$ for 30 minutes to sinter, and it was further heated to 1700 °C to graphitize. A carbon composite material of Example No. 3-1 was thus obtained.

This carbon composite material had an apparent density of 1.95 g/cm$^3$, and it included zirconium boride in an amount of 5.9%. Its average thermal expansion coefficient "$\alpha$" was 5.6 x 10$^{-6}$/°C in a range of 20 to 1000 °C.

The base of this example exhibited an average thermal expansion coefficient "$\alpha_1$" of 5.6 x 10$^{-6}$/°C in a range of 20 to 1000 °C. The base included the carbon fiber and the matrix carbon raw material, and it was produced in the same manner as described above, but it was free from the zirconium boride. Accordingly, in the carbon composite material of this example, the difference between the thermal expansion coefficients of the base and the ceramics was -2.7 x 10$^{-6}$/°C.

Example No. 3-2

A carbon composite material of Example No. 3-2 including tantalum nitride was obtained in the same manner as that of Example No. 3-1 other than that tantalum nitride (TaN) powder ("$\alpha_2$": 3.8 x 10$^{-6}$/°C) having an average particle diameter of 3.1 micrometers was used instead of the zirconium boride powder used in Example No. 3-1.

A tantalum nitride content and an apparent density of the thus obtained carbon composite material were 5.8% and 1.98 g/cm$^3$, respectively. An average thermal expansion coefficient "$\alpha$" of this carbon composite material was 5.4 x 10$^{-6}$/°C in a range of 20 to 1000 °C. Further, in the carbon composite material of this example, the difference between the thermal expansion coefficients of the base and the ceramics was 1.8 x 10$^{-6}$/°C.

Comparative Example No. 3

A carbon composite material of Comparative Example No. 3 including rutile was obtained in the same manner as that of Example No. 3-1 other than that rutile (TiO$_2$) powder ("$\alpha_2$": 8.3 x 10$^{-6}$/°C) having an average particle diameter of 0.4 micrometers was used instead of the zirconium boride powder used in Example No. 3-1.

A rutile content and an apparent density of the thus obtained carbon composite material was 5.8% and 1.76 g/cm$^3$, respectively. An average thermal expansion coefficient "$\alpha$" of this carbon composite material was 5.3 x 10$^{-6}$/°C in a range of 20 to 1000 °C. Further, in the carbon composite material of this comparative example, the difference between the thermal expansion coefficients of the base and the ceramics was -2.7 x 10$^{-6}$/°C.

Example No. 4-1

As the carbon fiber, cloth which was made by plain weaving PAN carbon fiber was used. The PAN carbon fiber included 1000 filaments. As the matrix carbon raw material, the self-sintering carbon powder used in Example No. 2-1 was used. As the ceramics, aluminum nitride (AlN) powder ("$\alpha_2$": 4.5 x 10$^{-6}$/°C) having an average particle diameter of 1.4 micrometers was used.

First of all, the carbon powder and the ceramics were mixed in a ratio of 4 : 1 by weight, and they were fully blended to prepare mixed powder. Then, this mixed powder was kneaded into and adhered to the surfaces of the carbon fiber cloth to obtain a prepreg. An intermediate body was thus prepared. This intermediate body was placed in a mold, it was hot-pressed at 200 °C under a molding pressure of 200 kgf/cm$^2$ for 10 minutes to sinter. Finally, the molding pressure was raised to 500 kgf/cm$^2$, the intermediate body was further heated to 1700 °C and held at the temperature for 30 minutes to graphitize. A carbon composite material of Example No. 4-1 was thus obtained.

This carbon composite material had an apparent density of 1.82 g/cm$^3$, and it included aluminum nitride in an amount of 6.1%. Its average thermal expansion coefficient "$\alpha$" was 4.1 x 10$^{-6}$/°C in a range of 20 to 1000 °C.

The base of this example exhibited an average thermal expansion coefficient "$\alpha_1$" of 4.0 x 10$^{-6}$/°C in a range of 20 to 1000 °C. The base included the carbon fiber cloth and the matrix carbon raw material, and it was produced in the same manner as described above, but it was free from the aluminum nitride. Accordingly, in the carbon composite material of this example, the difference between the thermal expansion coefficients of the base and the ceramics was -0.5 x 10$^{-6}$/°C.

Example No. 4-2

A carbon composite material of Example No. 4-2 including tantalum nitride was obtained in the same manner as that of Example No. 4-1 other than that tantalum nitride (TaN) powder ("$\alpha_2$": 3.8 x 10$^{-6}$/°C) having an average particle diameter of 3.1 micrometers was used instead of the aluminum nitride powder used in Example No. 4-1.

A tantalum nitride content and an apparent density of the thus obtained carbon composite material were 5.3% and 1.89 g/cm$^3$, respectively. An average thermal expansion coefficient "$\alpha$" of this carbon composite material was 4.9 x 10$^{-6}$/°C in a range of 20 to 1000 °C. Further, in the carbon composite material of this example, the difference between the thermal expansion coefficients of the base and the ceramics was +0.2 x 10$^{-6}$/°C.

Comparative Example No. 4

A carbon composite material of Comparative Example No. 4 including alumina was obtained in the same manner as that of Example No. 4-1 other than that alumina powder ("$\alpha_2$": 7.2 x 10$^{-6}$/°C) having an average particle diameter of 1.0 micrometer was used instead of the aluminum nitride powder used in Example No. 4-1.

An alumina content and an apparent density of the thus obtained carbon composite material was 5.9% and 1.73 g/cm$^3$, respectively. An average thermal expansion coefficient "$\alpha$" of this carbon composite material was 3.8 x 10$^{-6}$/°C in a range of 20 to 1000 °C. Further, in the carbon composite material of this comparative example, the difference between the thermal expansion coefficients of the base and the ceramics was -3.2 x 10$^{-6}$/°C.

First Evaluation

The above-described 13 carbon composite materials, i.e., Example Nos. 1-1 through 4-2 and Comparative Example Nos. 1 through 4, were evaluated on their friction coefficients under no lubrication condition. This evaluation was carried out to measure the friction coefficients of the carbon composite materials with a machine testing laboratory type friction/wear tester under the following conditions:

No lubrication;

Revolving speed of 160 rpm (or sliding speed of 20 cm/sec. ); and

Incremental load from 50 kgf to 200 kgf at a rate of 10 kgf per 2 minutes.

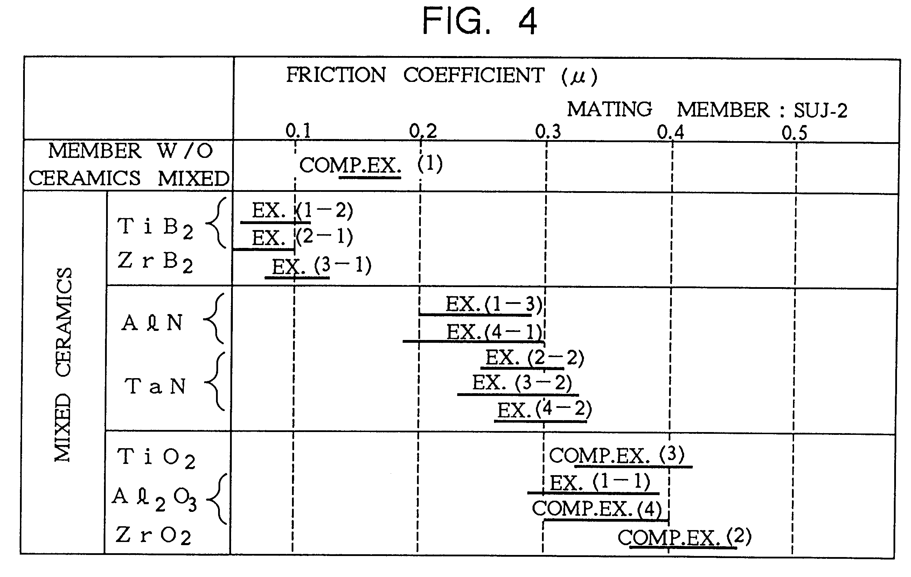

As a mating member, high carbon content chromium steel for bearing (SUJ2 as per JIS, hereinafter simply referred to as "SUJ2") was used. The results of the measurement are shown in Figure 4.

As can be seen from Figure 4, all of the 4 carbon composite materials, i.e., Example No. 1-1 according to the present invention as well as Comparative Example No. 2, Comparative Example No. 3 and Comparative Example No. 4, in which the oxide ceramics were mixed had higher friction coefficients, and the higher friction coefficients fell in a range of 0.28 to 0.45 approximately.

On the other hand, all of the 5 carbon composite materials, i.e., Example No. 1-3, Example No. 2-2, Example No. 3-2, Example No. 4-1 and Example No. 4-2 according to the present invention, in which the nitride ceramics were mixed had relatively intermediate friction coefficients, and the relatively intermediate friction coefficients fell in a range of 0.19 to 0.34 approximately.

Moreover, all of the 3 carbon composite materials, i.e., Example No. 1-2, Example No. 2-1 and Example No. 3-1, according to the present invention, in which the boride ceramics were mixed had low friction coefficients, and the low friction coefficients fell in a range of 0.05 to 0.13 approximately.

According to these results, it was found that the friction coefficient of the resulting carbon composite material could be varied by appropriately selecting the kinds of the ceramics to be mixed.

Second Evaluation

The above-described 13 carbon composite materials of Examples according to the present invention and Comparative Examples were evaluated on their wear amounts under a wet condition (i.e., under oil lubrication). This evaluation was carried out to measure the wear amounts of the carbon composite materials with an LFW friction/wear tester (a Falex Ring and Block tester) under the following conditions:

Oil lubrication;
Load of 15 kgf;
Revolving speed of 160 rpm; and
Testing time of 15 minutes.

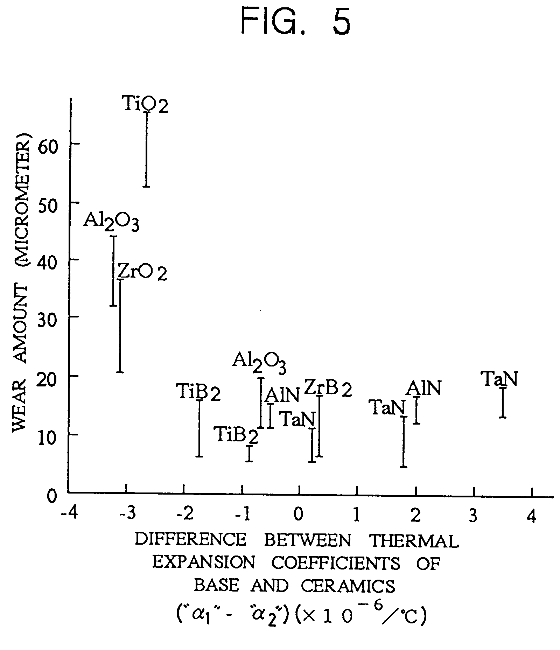

As a mating member, a ring made of SUJ2 was used, and the carbon composite materials were molded into test pieces in a form of a flat plate having a size of 10.0 mm x 15.7 mm. The results of the measurement on their wear amounts (in micrometer) are set forth in Table 1. Also, Figure 5 illustrates the relationships between the average thermal expansion coefficient differences ("$\alpha_1$" - "$\alpha_2$"), between the bases and the ceramics used in the carbon composite materials, and their wear amounts.

It is understood from Figure 5 that the wear amount increased sharply when the average thermal expansion coefficient difference ("$\alpha_1$" - "$\alpha_2$") between the bases and the ceramics was far smaller than $-2 \times 10^{-6}/°C$. Although the case where the average thermal expansion coefficient difference ("$\alpha_1$" - "$\alpha_2$") between the bases and the ceramics exceeded far greater than $3.5 \times 10^{-6}/°C$ is not set forth in the above-described Examples and Comparative Examples, the wear amounts also increased sharply if such was the case.

The carbon composite material which included the base only and which was free from the ceramics, i.e., Comparative Example No. 1, exhibited an average wear amount of 20 to 25 micrometers. Hence, it is apparent that the carbon composite material according to the present invention had a much better wear resistance than carbon fiber reinforced carbon material which did not include the ceramics.

TABLE 1
Wear Amounts (in micrometers)

| | | Ex. Nos. 1-1 to 1-3 | Ex. Nos. 2-1 to 2-2 | Ex. Nos. 3-1 to 3-2 | Ex. Nos. 4-1 to 4-2 |
|---|---|---|---|---|---|
| Mixed Ceramics | TaN | – | 14-19 | 5-13 | 6-11 |
| | AlN | 12-16 | – | – | 11-14 |
| | $ZrB_2$ | – | – | 9-16 | – |
| | $TiB_2$ | 7-15 | 6-10 | – | – |
| | $TiO_2$ | – | – | (53-65) | – |
| | $Al_2O_3$ | 11-20 | – | – | (22-43) |
| | $ZrO_2$ | – | (21-36) | – | – |

The values in parentheses are those for Comparative Examples.

Example No. 5

As the carbon fiber, pitch carbon fiber (optically isotropic fiber, Donacarbo "S210" made by Donac Co., Ltd.) having a length of 20 mm was used. As the matrix carbon raw material, phenol resin was used, and it was dispersed in alcohol before use. Into each 1 liter of this alcohol dispersion solution, one of mullite ($Al_2O_3\cdot2SiO_2$, "$\alpha_2$": $4.8 \times 10^{-6}/°C$) having an average particle diameter of 1.2 micrometers, alumina ($Al_2O_3$, "$\alpha_2$": $7.2 \times 10^{-6}/°C$)

having an average particle diameter of 0.5 micrometers and magnesia (MgO, "$\alpha_2$": 13.0 x $10^{-6}$/°C) having an average particle diameter of 0.6 micrometers was added in an amount 50 grams, thereby preparing 3 mixtures. Each of these mixtures was stirred independently and uniformly, and thereafter the above-described carbon fiber was added to each of the mixtures in an amount of 300 grams. Each of the mixtures with the carbon fiber added was stirred for another 30 minutes. Then, each of the resulting mixtures was placed in a mold independently, the excess alcohol was dripped from the bottom of the molds, and the mixtures were dried together with the molds at 80 °C for 10 hours. Finally, the mixtures were cured at 180 °C.

The thus solidified molded bodies were taken out of the molds, and they were heated to 1700 °C at maximum so as to carbonize and graphitize the phenol resin. Thereafter, the molded bodies were densified by carrying out CVD (chemical vapor deposition), thereby obtaining the carbon composite materials of Example No. 5 according to the present invention. The CVD was carried out as follows. The graphitized bodies were heated to 600 °C with a high frequency induction heating furnace. Then, dichloroethylene was introduced into and decomposed thermally in the furnace, and thereby the graphitized bodies were densified.

These carbon composite materials included mullite, alumina and magnesia in an amount of 5.1%, 5.6% and 5.3%, respectively, and all of them had an apparent density of 1.7 g/cm³. Further, the carbon composite materials, in which mullite, alumina and magnesia were mixed respectively, exhibited an average thermal expansion coefficient of 5.4 x $10^{-6}$/°C, 5.7 x $10^{-6}$/°C and 6.2 x $10^{-6}$/°C in a range of 20 to 1000 °C, respectively.

The base constituting the carbon composite materials of this example can be regarded as the same as the carbon fiber reinforced carbon material of Comparative Example No. 5 described later. Accordingly, as can be understood from Comparative Example No. 5, an average thermal expansion coefficient "$\alpha_1$" of this base can be 5.5 x $10^{-6}$/°C. The thermal expansion coefficient difference ("$\alpha_1$" - "$\alpha_2$") between the base and the ceramics can be calculated from the average thermal expansion coefficient "$\alpha_1$" of this base and the average thermal expansion coefficients "$\alpha_2$" of the ceramics. Consequently, in the carbon composite materials of this example which included mullite, alumina and magnesia respectively, their thermal expansion coefficient differences ("$\alpha_1$" - "$\alpha_2$") between the base and ceramics were +0.7 x $10^{-6}$/°C, -1.7 x $10^{-6}$/°C and -7.5 x $10^{-6}$/°C, respectively.


## Example No. 6

As the carbon fiber, the same pitch carbon fiber having a length of 20 mm as used in Example No. 5 was used. This pitch carbon fiber was pulverized to and used as milled powder having a fiber length of 0.5 mm. As the matrix carbon raw material, coal tar mesocarbon micro-beads (made by Osaka Gas Co., Ltd.) having an average particle diameter of 7 micrometers was used. As the oxide ceramics, the same 3 oxide ceramics powders used in Example No. 5 were used. The raw materials were mixed in a mixing ratio of the carbon fiber : the mesocarbon micro-beads : the oxide ceramics powder = 25 : 75 : 5 by weight, thereby preparing 3 mixtures. Each of the resulting 3 mixtures was blended with a grinding mixere independently, and further each of them was molded with a universal press at room temperature under a molding pressure of 1 ton/cm². Thereafter, the thus molded bodies were heated to 1000 °C at a heating speed of 150 °C/hour under an ordinary pressure in a non-oxidizing atmosphere, they were held at the temperature for 1 hour, and then they were further heated to 1700 °C at a heating speed of 500 °C/hour to sinter. Carbon composite materials of Example No. 6 were thus obtained.

A mullite, alumina or magnesia content and an apparent density of these carbon composite materials were 6.1% and 1.75 g/cm³, 6.2% and 1.86 g/cm³, and 6.1% and 1.71 g/cm³, respectively. Further, the carbon composite materials, in which mullite, alumina and magnesia were mixed respectively, exhibited an average thermal expansion coefficient of 7.2 x $10^{-6}$/°C, 7.0 x $10^{-6}$/°C and 8.3 x $10^{-6}$/°C in a range of 20 to 1000 °C, respectively.

A carbon fiber reinforced carbon material was produced in the same manner as that of this example other than that the oxide ceramics were not included at all. This carbon fiber reinforced carbon material was taken as the base of the carbon composite materials of this example, and its average thermal expansion coefficient "$\alpha_1$" was 7.3 x $10^{-6}$/°C in a range of 20 to 1000 °C. The thermal expansion coefficient difference ("$\alpha_1$" - "$\alpha_2$") between the base and the ceramics can be calculated from the average thermal expansion coefficient "$\alpha_1$" of this base and the average thermal expansion coefficients "$\alpha_2$" of the ceramics. Consequently, in the carbon composite materials of this example which included mullite, alumina and magnesia respectively, their thermal expansion coefficient differences ("$\alpha_1$" - "$\alpha_2$") between the base and the ceramics were +2.5 x $10^{-6}$/°C, +0.1 x $10^{-6}$/°C and -5.7 x $10^{-6}$/°C, respectively.


## Example No. 7

As the carbon fiber, pitch carbon fiber including 3000 filaments was used. As the matrix carbon raw material, a mixture was used in which pulverized pitch having a softening point of 280 °C and pulverized coke were mixed in equal volumes. As the oxide ceramics, the same 3 oxide ceramics (i.e., mullite, alumina and magnesia) used in Example No. 5 were used.

First of all, the raw materials were mixed in a mixing ratio of the pulverized pitch : the pulverized coke : one of the oxide ceramics = 1 : 1 : 0.5 by weight, and they were fully blended to prepare 3 mixed powders. Then, each of these mixed powders was adhered independently to the surfaces of the carbon fiber filaments with a particle adhering apparatus. The surfaces of the carbon fiber with these mixed powders adhered were covered with polyethylene in a film thickness of 10 micrometers, and the carbon fiber was wound around a bobbin, thereby preparing 3 intermediate bodies. Each of these 3 intermediate bodies was placed respectively in a mold so as to orient in a predetermined direction, thereby making 3 plate-shaped assembly bodies. These assembly bodies were hot-pressed at 600 °C under a molding pressure of 500 kgf/cm$^2$ for 30 minutes to sinter, and they were further heated to 1700 °C to graphitize. Three carbon composite materials of Example No. 7 were thus obtained.

A mullite, alumina or magnesia content and an apparent density of these carbon composite materials were 1.0% and 1.75 g/cm$^3$, 8% and 1.75 g/cm$^3$, and 10% and 1.76 g/cm$^3$, respectively. Further, the carbon composite materials, in which mullite, alumina and magnesia were mixed respectively, exhibited an average thermal expansion coefficient of 5.6 x 10$^{-6}$/°C, 5.9 x 10$^{-6}$/°C and 6.1 x 10$^{-6}$/°C in a range of 20 to 1000 °C, respectively.

A carbon fiber reinforced carbon material was produced in the same manner as that of this example other than that the oxide ceramics were not included at all. This carbon fiber reinforced carbon material was taken as the base of the carbon composite materials of this example, and its average thermal expansion coefficient "$\alpha_1$" was 5.6 x 10$^{-6}$/°C in a range of 20 to 1000 °C. The thermal expansion coefficient difference ("$\alpha_1$" - "$\alpha_2$") between the base and the ceramics can be calculated from the average thermal expansion coefficient "$\alpha_1$" of this base and the average thermal expansion coefficients "$\alpha_2$" of the ceramics. Consequently, in the carbon composite materials of this example which included mullite, alumina and magnesia respectively, their thermal expansion coefficient differences ("$\alpha_1$" - "$\alpha_2$") between the base and ceramics were +0.8 x 10$^{-6}$/°C, -1.6 x 10$^{-6}$/°C and -7.4 x 10$^{-6}$/°C, respectively.

## Example No. 8

As the carbon fiber, cloth which was made by plain weaving PAN carbon fiber was used. The PAN carbon fiber included 1000 filaments. As the matrix carbon raw material, the self-sintering carbon powder used in Example No. 6 was used. As the oxide ceramics, the same 3 oxide ceramics used in Example No. 5 were used.

First of all, the carbon powder and one of the oxide ceramics were mixed in a ratio of 4 : 1 by weight, and they were fully blended to prepare 3 mixed powders. Then, each of these mixed powders was kneaded into and adhered to the surfaces of the carbon fiber cloth to obtain 3 prepregs. Three intermediate bodies were thus prepared. Each of these intermediate bodies were placed respectively in a mold, it was hot-pressed at 200 °C under a molding pressure of 200 kgf/cm$^2$ for 10 minutes to sinter. Finally, the molding pressure was raised to 500 kgf/cm$^2$, the intermediate bodies were further heated to 1700 °C to graphitize. Three carbon composite materials of Example No. 8 were thus obtained.

A mullite, alumina or magnesia content and an apparent density of these carbon composite materials were 8% and 1.70 g/cm$^3$, 7% and 1.72 g/cm$^3$, and 8% and 1.72 g/cm$^3$, respectively. Further, the carbon composite materials, in which mullite, alumina and magnesia were mixed respectively, exhibited an average thermal expansion coefficient of 4.2 x 10$^{-6}$/°C, 4.3 x 10$^{-6}$/°C and 4.5 x 10$^{-6}$/°C in a range of 20 to 1000,°C, respectively.

A carbon fiber reinforced carbon material was produced in the same manner as that, of this example other than that the oxide ceramics were not included at all. This carbon fiber reinforced carbon material was taken as the base of the carbon composite materials of this example, and its average thermal expansion coefficient "$\alpha_1$" was 4.0 x 10$^{-6}$/°C in a range of 20 to 1000 °C. The thermal expansion coefficient difference ("$\alpha_1$" - "$\alpha_2$") between the base and the ceramics can be calculated from the average thermal expansion coefficient "$\alpha_1$" of this base and the average thermal expansion coefficients "$\alpha_2$" of the ceramics. Consequently, in the carbon composite materials of this example which included mullite, alumina and magnesia respectively, their thermal expansion coefficient differences ("$\alpha_1$" - "$\alpha_2$") between the base and ceramics were -0.8 x 10$^{-6}$/°C, -3.2 x 10$^{-6}$/°C and -9.0 x 10$^{-6}$/°C, respectively.

## Comparative Example No. 5

A carbon fiber reinforced carbon material of Comparative Example No. 5 being free from the ceramics was prepared in the same manner as that of Example No. 5 other than that the oxide ceramics were not used.

An apparent density of the thus obtained carbon fiber reinforced carbon material of Comparative Example No. 5 was 1.69 g/cm$^3$. An average thermal expansion coefficient of this carbon fiber reinforced carbon material was 5.5 x 10$^{-6}$/°C in a range of 20 to 1000 °C.

Comparative Example No. 6

A carbon composite material of Comparative Example No. 6 including silicon carbide was prepared in the same manner as that of Example No. 5 other than that silicon carbide (SiC) having an average particle diameter of 3 micrometers was used instead of the oxide ceramics used in Example No. 5.

A silicon carbide content and an apparent density of the thus obtained carbon composite material were 5.3% and 1.70 g/cm$^3$, respectively. An average thermal expansion coefficient of this carbon composite material was 5.3 x 10$^{-6}$/°C in a range of 20 to 1000 °C.

Comparative Example No. 7

A carbon composite material of Comparative Example No. 7 including silicon carbide was prepared in the same manner as that of Example No. 6 other than that silicon carbide (SiC) having an average particle diameter of 3 micrometers was used instead of the oxide ceramics used in Example No. 6.

A silicon carbide content and an apparent density of the thus obtained carbon composite material were 6.3% and 1.73 g/cm$^3$, respectively. An average thermal expansion coefficient of this carbon composite material was 7.2 x 10$^{-6}$/°C in a range of 20 to 1000 °C.

Comparative Example No. 8

A carbon composite material of Comparative Example No. 8 including silicon carbide was prepared in the same manner as that of Example No. 7 other than that silicon carbide (SiC) having an average particle diameter of 3 micrometers was used instead of the oxide ceramics used in Example No. 7.

A silicon carbide content and an apparent density of the thus obtained carbon composite material were 11% and 1.75 g/cm$^3$, respectively. An average thermal expansion coefficient of this carbon composite material was 5.2 x 10$^{-6}$/°C in a range of 20 to 1000 °C.

Third Evaluation

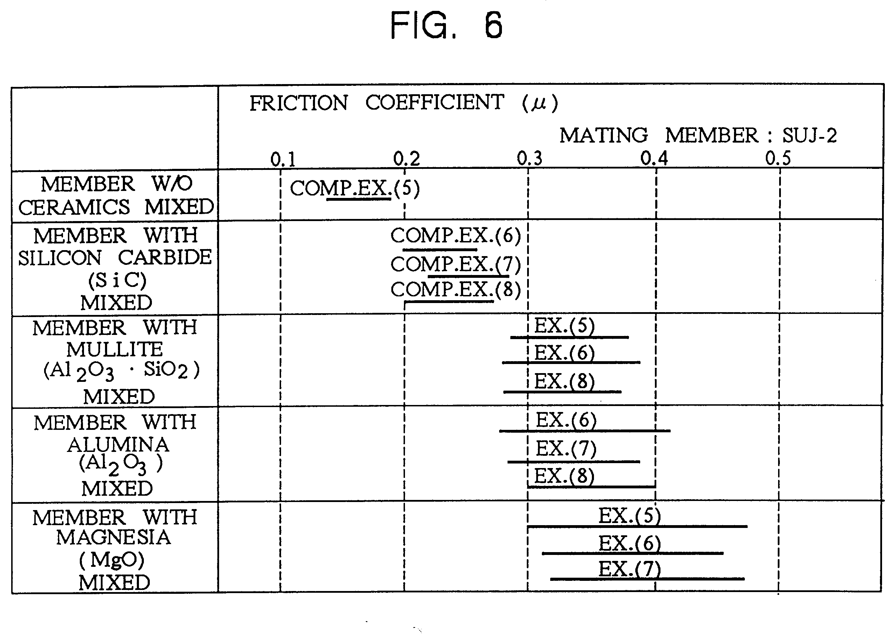

Each the three carbon composite materials of Example Nos. 5 through 8, the carbon fiber reinforced carbon material of Comparative Example No. 5, and each carbon composite material of Comparative Examples Nos. 6 through 8 were evaluated on their friction coefficients under no lubrication condition. This evaluation was carried out to measure the friction coefficients of the carbon composite materials and so on in the same manner as that of the First Evaluation. The results of the measurement are shown in Figure 6.

As can be seen from Figure 6, the carbon composite materials, i.e., Example Nos. 5 through 8 according to the present invention, in which the oxide ceramics were mixed had higher friction coefficients, and the higher friction coefficients fell in a range of 0.28 to 0.47 approximately. On the other hand, the carbon composite materials, i.e., Comparative Example Nos. 6 through 8, in which the silicon carbide was mixed had relatively low friction coefficients, and the relatively low friction coefficients fell in a range of 0.2 to 0.29 approximately. Moreover, as can be represented by Comparative Example No. 5, the carbon fiber reinforced carbon material in which no ceramics were mixed had a further lower friction coefficient, and the further lower friction coefficient fell in a range of 0.14 to 0.19 approximately.

According to these results, it was found that the carbon composite materials according to the present invention in which the oxide ceramics were mixed came to have higher friction coefficients. Among the oxide ceramics, the magnesia gave the present carbon composite materials slightly higher friction coefficients than the other mullite and alumina did.

Fourth Evaluation

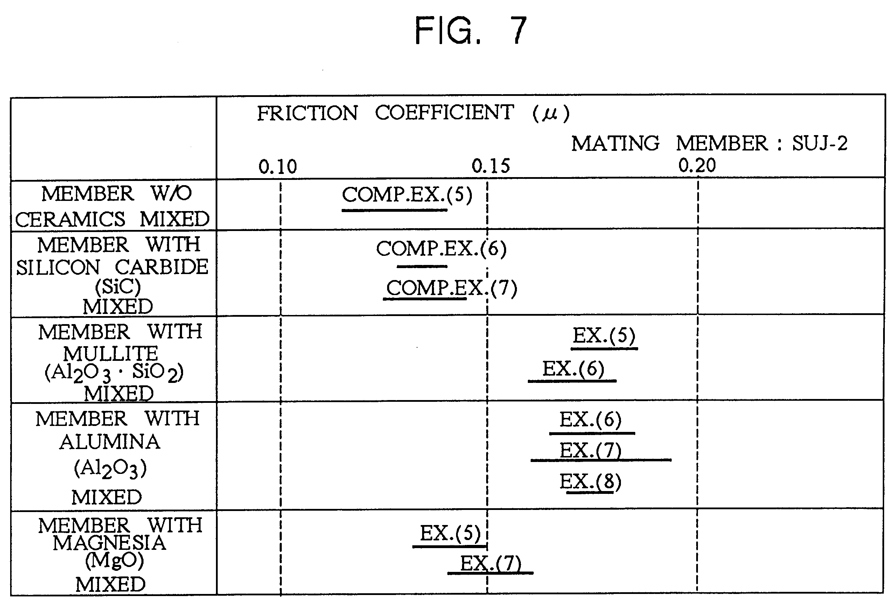

Each the three carbon composite materials of Example Nos. 5 through 8, the carbon fiber reinforced carbon material of Comparative Example No. 5, and each carbon composite material of Comparative Examples Nos. 6 through 8 were evaluated on their friction coefficients and wear amounts under a wet condition (i.e., under oil lubrication). This evaluation was carried out to measure the friction coefficients and wear amounts of the carbon composite materials and so on in the same manner as that of the Second Evaluation. Part of the results of the friction coefficient measurement are shown in Figure 7, and the results of the wear amount measurement are set forth in Table 2. Also in Table 2, the average thermal expansion coefficient differences ("$\alpha_1$" - "$\alpha_2$") be-

tween the bases and the oxide ceramics used in the carbon composite materials of Example Nos. 5 through 8 are incorporated for reference.

It is understood from Figure 7 that the carbon composite materials in which the mullite and alumina were mixed exhibited relatively higher friction coefficients of 0.16 to 0.18 among the carbon composite materials of Example Nos. 5 through 8 in which the oxide ceramics were mixed. Contrary to the friction coefficient measured under the dry condition, the carbon composite materials in which the magnesia was mixed exhibited friction coefficients of 0.13 to 0.16, and the friction coefficients were lower than those of the carbon composite materials in which the mullite and alumina were mixed.

The carbon composite materials of Comparative Example Nos. 6 and 7 in which the silicon carbide was mixed exhibited friction coefficients of 0.12 to 0.14, and the friction coefficients were slightly higher than that of the carbon fiber reinforced carbon material of Comparative Example No. 5 in which no ceramics were mixed. The carbon fiber reinforced carbon material exhibited a friction coefficient of 0.11 to 0.14.

According to these results, it was found that the carbon composite materials according to the present invention in which the oxide ceramics were mixed came to have higher friction coefficients even under the oil lubrication. Among the oxide ceramics, the magnesia gave the present carbon composite materials slightly lower friction coefficients than the other mullite and alumina did.

<div align="center">

TABLE 2
Wear Amounts (in micrometers)

</div>

| | Mixed Ceramics | | | |
| --- | --- | --- | --- | --- |
| | Mullite | Alumina | Magnesia | Silicon Carbide |
| | Wear Amount | Wear Amount | Wear Amount | Wear Amount |
| Ex. 5 | 10-18 (+0.7) | 28-36 (-1.7) | 63-89 (-7.5) | – – |
| Ex. 6 | 14-21 (+2.5) | 12-15 (+0.1) | 40-64 (-5.7) | – – |
| Ex. 7 | 14-22 (+0.8) | 10-16 (-1.6) | 33-59 (-7.4) | – – |
| Ex. 8 | 17-26 (-0.8) | 32-43 (-3.2) | 92-107 (-9.0) | – – |
| Comp. Ex. 6 | – | – | – | 12-17 |
| Comp. Ex. 7 | – | – | – | 25-42 |
| Comp. Ex. 8 | – | – | – | 24-49 |

Note: The values in parentheses are million times the average thermal expansion difference ($"\alpha_1" - "\alpha_2"$).

It is apparent from the comparison between the wear amounts and the average thermal expansion differences ($"\alpha_1" - "\alpha_2"$) that, when the average thermal expansion difference ($"\alpha_1" - "\alpha_2"$) is $-2 \times 10^{-6}$ or more and when it is $+3.5 \times 10^{-6}$ or less, the carbon composite materials exhibited wear amounts as good as, or better (i.e., lower) than, those of the carbon composite materials of Comparative Example Nos. 6 through 8 which included the silicon carbide instead of the oxide ceramics. On the other hand, the carbon composite materials whose average thermal expansion differences ($"\alpha_1" - "\alpha_2"$) are far smaller than $-2 \times 10^{-6}$, for instance, the carbon composite materials of Example Nos. 5 through 8 in which the alumina was mixed or in which the magnesia

<div align="center">

16

</div>

was mixed, exhibited extremely high wear amounts.

Having now fully described the present invention, it will be apparent to one of ordinary skill in the art that many changes and modifications can be made thereto without departing from the spirit or scope of the present invention as set forth herein including the appended claims.

## Claims

1. A carbon composite material, comprising:
   base including matrix carbon; and
   ceramics buried in said base; and
   a difference between an average thermal expansion coefficient "$\alpha_1$" of said base in a range of 20 to 1000 °C and an average thermal expansion coefficient "$\alpha_2$" of said ceramics in a range of 20 to 1000 °C satisfying the following condition:

   $$-2 \times 10^{-6}/°C \leqq ("\alpha_1" - "\alpha_2") \leqq 3.5 \times 10^{-6}/°C.$$

2. The carbon composite material according to claim 1, wherein said ceramics is included in an amount of 3 to 20% by weight when taking a whole of said carbon composite material as 100% by weight, and carbon fiber is included in an amount of 40% by weight or less when taking the whole as 100% by weight.

3. The carbon composite material according to claim 2, wherein said carbon fiber is at least one of polyacrylonitrile carbon fiber and pitch carbon fiber.

4. The carbon composite material according to claim 3, wherein said carbon fiber is optically isotropic pitch carbon fiber.

5. The carbon composite material according to claim 2, wherein said carbon fiber is preliminarily carbonized carbon fiber which can accept further carbonization.

6. The carbon composite material according to claim 2, wherein said carbon fiber has a length of 0.01 to 50 mm and a diameter of 5 to 25 micrometers.

7. The carbon composite material according to claim 6, wherein said length falls in a range of 0.03 to 10 mm.

8. The carbon composite material according to claim 1, wherein an apparent density thereof is 1.65 g/cm³ or more.

9. The carbon composite material according to claim 1, wherein said ceramics is oxide, and a friction coefficient thereof falls in a range of 0.28 to 0.45 under a dry condition.

10. The carbon composite material according to claim 9, wherein said oxide is at least one selected from the group consisting of mullite ($3Al_2O_3 \cdot 2SiO_2$), alumina ($Al_2O_3$), rutile ($TiO_2$), zirconia ($ZrO_2$), beryllia (BeO), magnesia (MgO), calcium oxide (CaO) and silicon dioxide ($SiO_2$).

11. The carbon composite material according to claim 1, wherein said ceramics is nitride, and a friction coefficient thereof falls in a range of 0.19 to 0.34 under a dry condition.

12. The carbon composite material according to claim 11, wherein said nitride is at least one selected from the group consisting of aluminum nitride (AlN), zirconium nitride (ZrN), titanium nitride (TiN), tantalum nitride (TaN), chromium nitride ($Cr_2N$) and boron nitride (BN).

13. The carbon composite material according to claim 1, wherein said ceramics is boride, and a friction coefficient thereof falls in a range of 0.05 to 0.13 under a dry condition.

14. The carbon composite material according to claim 13, wherein said boride is at least one selected from the group consisting of titanium boride ($TiB_2$), zirconium boride ($ZrB_2$), boron carbide ($B_4C$), nickel boride (NiB), cobalt boride (CoB), boron nitride (BN) and tantalum boride ($TaB_2$).

15. The carbon composite material according to claim 1, wherein said ceramics has a melting point of 1600 °C or more, and is less likely to react with carbon of said base.

17

16. The carbon composite material according to claim 1, wherein said matrix carbon includes at least one selected from the group consisting of carbonized phenol resin, carbonized coal pitch, carbonized petroleum pitch, pulverized coke, mesocarbon micro-beads, carbon obtained by a vapor phase process through chemical vapor deposition.

17. The carbon composite material according to claim 1, wherein said matrix carbon includes carbon fiber reinforced carbon.

18. The carbon composite material according to claim 1, wherein said matrix carbon further includes carbon fiber.

19. The carbon composite material according to claim 1, wherein said ceramics is at least one of ceramics powder and ceramics fiber.

20. The carbon composite material according to claim 19, wherein said ceramics is ceramics powder, and the ceramics powder has an average particle diameter of 0.1 to 10 micrometers.

21. The carbon composite material according to claim 20, wherein said average particle diameter falls in a range of 0.3 to 5 micrometers.

22. The carbon composite material according to claim 19, wherein said ceramics is ceramics fiber, and the ceramics fiber has a diameter of 0.7 to 40 micrometers and a length of 0.01 to 8 mm.

23. The carbon composite material according to claim 22, wherein said diameter falls in a range of 1 to 15 micrometers, and said length falls in a range of 0.05 to 3 mm.

24. A carbon composite material having a high friction coefficient, comprising:
   base including carbon fiber reinforced carbon; and
   oxide ceramics buried in said base in an amount of 3 to 20% by weight, having a melting point of 1600 °C or more, and being less likely to react with carbon of said base.

25. The carbon composite material having a high friction coefficient according to claim 24, wherein said carbon composite material further includes carbon fiber in an amount of 40% by weight or less.

26. The carbon composite material having a high friction coefficient according to claim 25, wherein said carbon fiber is at least one of polyacrylonitrile carbon fiber and pitch carbon fiber.

27. The carbon composite material having a high friction coefficient according to claim 26, wherein said carbon fiber is optically isotropic pitch carbon fiber.

28. The carbon composite material having a high friction coefficient according to claim 25, wherein said carbon fiber is preliminarily carbonized carbon fiber which can accept further carbonization.

29. The carbon composite material having a high friction coefficient according to claim 25, wherein said carbon fiber has a length of 0.01 to 50 mm and a diameter of 5 to 25 micrometers.

30. The carbon composite material having a high coefficient according to claim 29, wherein said length falls in a range of 0.03 to 10 mm.

31. The carbon composite material having a high friction coefficient according to claim 24, wherein an apparent density thereof is 1.65 g/cm$^3$ or more.

32. The carbon composite material having a high friction coefficient according to claim 24, wherein a difference between an average thermal expansion coefficient "$\alpha_1$" of said base in a range of 20 to 1000 °C and an average thermal expansion coefficient "$\alpha_2$" of said oxide ceramics in a range of 20 to 1000 °C satisfies the following condition:

$$-2 \times 10^{-6}/°C \leqq ("\alpha_1" - "\alpha_2") \leqq 3.5 \times 10^{-6}/°C.$$

33. The carbon composite material having a high friction coefficient according to claim 24, said carbon fiber reinforced carbon includes at least one selected from the group consisting of carbonized phenol resin, carbonized coal pitch, carbonized petroleum pitch, pulverized coke, mesocarbon micro-beads, carbon obtained by a vapor phase process through chemical vapor deposition.

34. The carbon composite material having a high friction coefficient according to claim 24, wherein said oxide ceramics is at least one selected from the group consisting of mullite ($3Al_2O_3 \cdot 2SiO_2$), alumina ($Al_2O_3$), rutile ($TiO_2$), zirconia ($ZrO_2$), beryllia (BeO), magnesia (MgO), calcium oxide (CaO) and silicon dioxide ($SiO_2$).

35. The carbon composite material having a high friction coefficient according to claim 24, wherein said oxide ceramics is at least one of oxide ceramics powder and oxide ceramics fiber.

36. The carbon composite material having a high friction coefficient according to claim 35, wherein said oxide ceramics is oxide ceramics powder, and the oxide ceramics powder has:an average particle diameter of 0.1 to 10 micrometers.

37. The carbon composite material having a high friction coefficient according to claim 36, wherein said average particle diameter falls in a range of 0.3 to 5 micrometers.

38. The carbon composite material having a high friction coefficient according to claim 35, wherein said oxide ceramics is oxide ceramics fiber, and the oxide ceramics fiber has a diameter of 0.7 to 40 micrometers and a length of 0.01 to 8 mm.

39. The carbon composite material having a high friction coefficient according to claim 38, wherein said diameter falls in a range of 1 to 15 micrometers, and said length falls in a range of 0.05 to 3 mm.

# FIG. 1

# FIG. 2

# FIG. 3

```
┌──────────────┐  ┌──────────────────┐  ┌──────────────┐
│ CARBONACEOUS │  │ INORGANIC  POWDER │  │ SELF-SINTERING│
│    FIBER     │  │  OR  INORGANIC   │  │ CARBONACEOUS │
│              │  │      FIBER       │  │    FIBER     │
└──────────────┘  └──────────────────┘  └──────────────┘
        │                  │                    │
        └──────────────────┼────────────────────┘
                           │
                  ┌─────────────────┐
                  │   DRY  MIXING   │
                  └─────────────────┘
                           │
                  ┌─────────────────┐
                  │  DRY  MOLDING   │
                  └─────────────────┘
                           │
                  ┌─────────────────┐
                  │    SINTERING    │
                  └─────────────────┘
                           │
                  ┌─────────────────┐
                  │   MACHINING     │
                  └─────────────────┘
                           │
                  ┌─────────────────┐
                  │   COMPLETION    │
                  └─────────────────┘
```

# FIG. 4

| | | FRICTION COEFFICIENT ($\mu$) | | | | |
|---|---|---|---|---|---|---|
| | | | | | MATING MEMBER : SUJ-2 | |
| | | 0.1 | 0.2 | 0.3 | 0.4 | 0.5 |
| MEMBER W/O CERAMICS MIXED | | COMP.EX. (1) | | | | |
| MIXED CERAMICS | TiB₂ { ZrB₂ | EX. (1−2) / EX. (2−1) / EX. (3−1) | | | | |
| | AℓN { TaN { | | EX.(1−3) / EX.(4−1) / EX. (2−2) / EX. (3−2) / EX.(4−2) | | | |
| | TiO₂ Aℓ₂O₃ { ZrO₂ | | | COMP.EX. (3) / EX. (1−1) / COMP.EX.(4) / COMP.EX. (2) | | |

EP 0 507 564 A2

# FIG. 5

# FIG. 6

EP 0 507 564 A2

| | FRICTION COEFFICIENT ($\mu$) MATING MEMBER : SUJ-2 | | | | |
|---|---|---|---|---|---|
| | 0.1 | 0.2 | 0.3 | 0.4 | 0.5 |
| MEMBER W/O CERAMICS MIXED | | COMP.EX.(5) | | | |
| MEMBER WITH SILICON CARBIDE (SiC) MIXED | | COMP.EX.(6) COMP.EX.(7) COMP.EX.(8) | | | |
| MEMBER WITH MULLITE ($Al_2O_3 \cdot SiO_2$) MIXED | | | EX.(5) EX.(6) EX.(8) | | |
| MEMBER WITH ALUMINA ($Al_2O_3$) MIXED | | | EX.(6) EX.(7) EX.(8) | | |
| MEMBER WITH MAGNESIA (MgO) MIXED | | | | EX.(5) EX.(6) EX.(7) | |

# FIG. 7

| | FRICTION COEFFICIENT ($\mu$) | | |
|---|---|---|---|
| | | | MATING MEMBER : SUJ-2 |
| | 0.10 | 0.15 | 0.20 |
| MEMBER W/O CERAMICS MIXED | | COMP.EX.(5) | |
| MEMBER WITH SILICON CARBIDE (SiC) MIXED | | COMP.EX.(6) COMP.EX.(7) | |
| MEMBER WITH MULLITE ($Al_2O_3 \cdot SiO_2$) MIXED | | | EX.(5) EX.(6) |
| MEMBER WITH ALUMINA ($Al_2O_3$) MIXED | | | EX.(6) EX.(7) EX.(8) |
| MEMBER WITH MAGNESIA (MgO) MIXED | | EX.(5) EX.(7) | |

EP 0 507 564 A2